# EUROPEAN PATENT SPECIFICATION

(11) **EP 0 995 564 B1**
(45) Date of publication and mention of the grant of the patent: **17.12.2003**
(21) Application number: 98830602.3
(22) Date of filing: 12.10.1998
(51) Int. Cl.: B29B 7/18, B29B 7/58

(54) **Mixer with plunger controlled by combined hydraulic and pneumatic means**
Mischer mit hydraulisch und pneumatisch gesteuerten Kolben
Malaxeur avec piston controllé par des moyens hydrauliques et pneumatiques

(43) Date of publication of application: 26.04.2000
(73) Proprietor: Comerio Ercole S.p.A., 21052 Busto Arsizio (Varese) (IT)
(72) Inventor: Lualdi, Renato, 21052 Busto Arsizio (IT)
(74) Representative: Pellegri, Alberto

(56) References cited:
- EP-A- 0 340 888
- EP-A- 0 403 160

## Description

### FIELD OF THE INVENTION

The present invention relates in general to a closed-chamber mixer machine and in particular to a machine for mixing natural or synthetic rubbers and polymers.

### BACKGROUND OF THE INVENTION

The production of rubber products involves several steps. In a first step, raw base materials are chewed in a suitable machine in order to facilitate the successive incorporation of other ingredients.

In the successive step of mixture preparation, the other ingredients or additives are mixed together with the base material, usually a rubber: These ingredients may comprise reinforcing materials, antioxidants, vulcanization agents, etc.. Such ingredients may be in form of granules, dusts or liquids and are added and dosed in different quantities and at different times in function of the physical and mechanical characteristics that should be obtained.

These blending and mixing operations may be carried out in a special closed-chamber machine.

Commonly, such a machine is made up of:
- two horizontally mounted counter-rotating rotors;
- a mixing chamber defined by two juxtaposed cylindrical cavities, housing the rotors, and closed at the top and at the bottom;
- a loading hopper;
- a discharge trap door that closes the bottom the mixing chamber;
- a plunger that closes a top loading port of the mixing chamber and suitably bears on the material being blended into the mixing chamber.

Generally, the mixing rotors are installed horizontally with their axes, parallel to each other, and may have special profiles that intersect each other (intersecting rotors) or may be substantially tangent to each other (tangent rotors). In any case the rotors mix the components by the frictioning forces induced with the mass of materials subject to a plastic flow by intense shear stresses.

To do this, the two rotors rotate contrariwise, driven by respective motors through mechanical transmissions. They may function at an identically variable speed or their speeds may be different from each other up to a ratio between the respective speeds that generally do not go over 50%.

The mixing chamber has a sturdy construction to withstand the intense stresses generated by the mixing process. A thermo-regulation fluid circulates in contact with the outer surface of the walls of the chamber to maintain constant operating parameters and avoid an undesirably premature vulcanization.

The mixing chamber has a top opening for introducing the various components products of the mixture. These component materials are normally loaded into the mixer chamber through an appropriate loading hopper.

The bottom of the mixing chamber may be opened for discharging the processed mass. The bottom opening is closed with a robust door which may slide or rotate and which effectively seals the chamber during the mixing process.

Sturdy pressing means function as a sealing plunger of the top loading opening of the mixing chamber. The plunger moves vertically and eventually presses the mixture while providing for an adequate sealing of the loading throat of the chamber in order to contain the rubbery mass being processed by the mixing rotors, substantially preventing the material from "extruding" along the walls of the loading throat of the mixing chamber.

The thermal regulating fluid may circulate also inside the plunger to help in controlling the processing temperature.

The mixing action provokes intense stresses and impacts on the plunger which must be of adequate sturdiness.

The plunger system of pressing and restraining the material being processed the mixing chamber fulfills the following functions and requisites:
1. Opening and closing run of the chamber: the plunger must be liftable well above the operating zone of the loading hopper of the mixture and once the loading is concluded, it must be lowered back into the loading throat of the mixing chamber;
2. Restraining and pressing: the plunger must keep the mixing chamber hermetically closed (or substantially so), for preventing the rubber mixture to extrude between the walls of the loading throat of the chamber throat and the walls of the plugging body of the plunger and must withstand intense stress peaks transmitted to the plunger by the mixture chewed by the mixing rotors;
3. Floating: this term, commonly refers to the requisite of the plunger to behave as a dampening structure so that peaks of stress transmitted to the plunger during the mixing process may be "absorbed" without transmitting excessive stresses to the whole rigid structure of the machine (that is on the chamber walls, on the rotors, on the discharge mechanisms, etc.) and to prevent peaks of current absorption by the motors that move the mixing rotors.

The known plunger systems, use alternatively either hydraulic or a pneumatic pressing systems. In either case, the plunger may be controlled by way of one or more double-acting pistons that actuate the vertical movements of the plunger during the mixing process, and during the mixing, maintain the plunger in contact with the mixture. In the case of a hydraulic system, the pistons may be controlled through an independent dedicated hydraulic system, while in the case of a pneumatic system, the pistons may be controlled by the general services compressed air.

In case of a hydraulic system, the thrust requisites are easily satisfied with cylinders of diameters not excessively large because of the relatively high pressure operation of a hydraulic system, which may be of several hundreds bars.

However, to lift or lower the plunger it will be necessary to supply fluid at a relatively large rate to the double-effect pistons to effect the rising and lowering of the plunger.

The "floating" characteristics of the plunger, that is, its capacity to "resiliently" absorb the peaks of stress transmitted to the plunger by the mixture, is intrinsically scarce due to the incompressible properties of hydraulic oils. Altogether, hydraulic plunger systems are highly rigid.

By contrast, in a pneumatic system, the lifting or lowering of the plunger absorbs a large volume of compressed air which besides implying high costs in terms of sizing of the compressed air supply system, also implies an increased bulkiness of the plant because of the presence of cumbersome air drums and severe noise pollution problems. The thrust requisites of the plunger may be met at the expense of an increasingly large diameter of the pistons in consideration of the relatively low working pressure of pneumatic systems, which is generally lower than 10 bars. On the other hand, the plunger has an intrinsic capacity to absorb stress peaks transmitted to the plunger by the mixture, and altogether pneumatic systems are very elastic.

EP.A-0403160 discloses a mixer wherein the floating weight defines at its interior, the cylinder of a fluid-operated piston-cylinder lifting and lowering mechanism in accordance with the preamble of claim 1. Several embodiments include also a pneumatic piston-cylinder mechanism for pressing the floating weight onto the material been mixed in the mixer chamber wherein the stems of the lowering and lifting piston and of the pneumatic piston are joined together through a universal joint capable of absorbing vibrations.

### OBJECT AND SUMMARY OF THE INVENTION

Confronted with these intrinsic advantages and drawbacks of a the selection of either a hydraulic or a pneumatic system for the plunger of known mixing machines, it has now been found a system that is able to optimally respond to the contrasting requisites of a plunger pressing system of a closed-chamber mixer machine.

It has been found that by employing a hydraulic primary driving system for lifting, lowering the plunger and for confining the mixture inside the mixing chamber and by associating to such a primary positioning system, a secondary system of pneumatic type, it is possible to achieve an overall high efficiency, an excellent sturdiness and a reduced operating noise proper of an hydraulic system, coupled to an outstanding capacity of resiliently absorbing peaks of stress transmitted to the plunger by the mixture being processed, that is completely and independently controllable and adjustable to a most desired value for effectively absorb such stress peaks. Moreover, the consumption of compressed air is reduced to that necessary to perform such a thrust dampening function so that air drums near the machine are not necessary. The result is an excellent synergical combination of the peculiarities of two different systems, hydraulic and pneumatic, and an optimal performance under any operating aspect, eliminating all the drawbacks and limits of traditional hydraulic or pneumatic plunger system machines.

The plunger of the invention permits the circulation of the thermo-regulating fluid inside the plunger body for helping in controlling the conditions inside the mixing chamber.

### BRIEF DESCRIPTION OF THE DRAWINGS

The various aspects and advantages of the invention will become more evident through the following description of an embodiment, and by referring to the attached drawings, wherein:
**Figures 1** and **2** are orthogonal elevation views of a mixer machine of the present invention;
**Figure 3** is a partial cross-section of the pressing plunger assembly of the machine;
**Figure 4** is a lateral view of the pressing plunger assembly of the machine, showing the relative layout of certain functional organs of the machine;
**Figure 5** is a diagram of the hydraulic driving circuit of the double-effect hydraulic pistons that move and position the plunger;
**Figure 6** is a diagram of the pneumatic circuit that controls the "floating" characteristic of the plunger.

### DESCRIPTION OF AN EMBODIMENT OF THE INVENTION

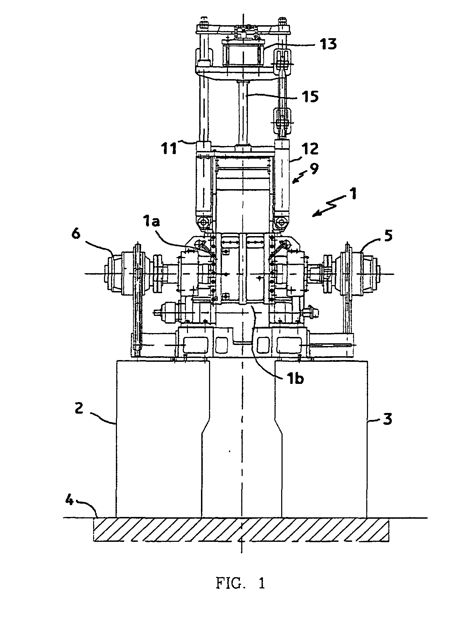

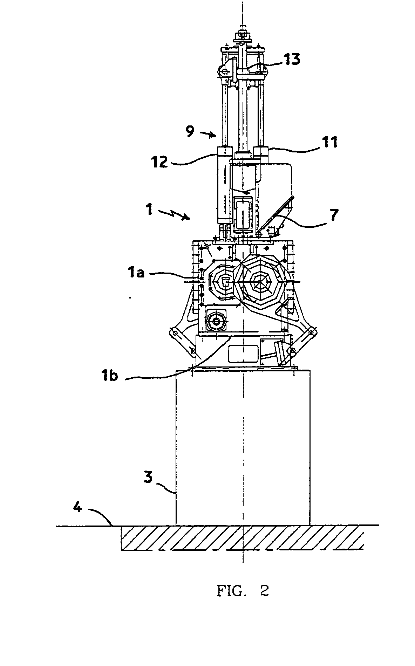

Figures 1 and 2 are a front and a lateral elevation views, respectively, of a closed-chamber mixer, indicated as a whole by 1, mounted in a bridge like fashion onto two robust pedestals 2 and 3, at a certain level from the floor 4. The mixing chamber is defined by a robust steel box-like structure 1a, typically provided with strengthening outer ribs. It may be provided with sleeves through which a thermo-regulating fluid may be circulated for controlling the temperature of the mass being mixed in the chamber.

Through opposite side walls of the chamber structure 1a are installed the drive axes of the two mixing rotors housed by the chamber. The chamber and the two rotors housed in it may have any of the commonly used configurations of commercial mixer machines.

Each mixing rotor, inside the chamber 1a, is driven by an independently controlled electric motor, indicated with 5 and 6, respectively, in Fig. 1.

The bottom 1b of the chamber may be opened at the completion of the mixing treatment to discharge the processed mixture.

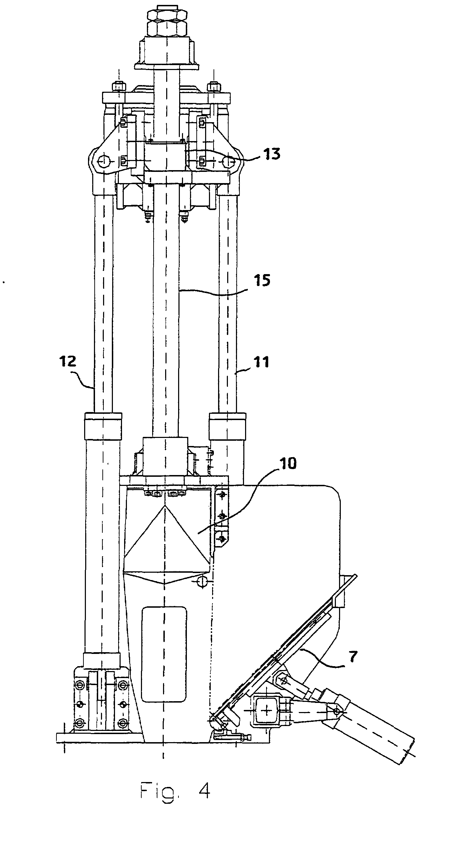

At the top, the mixing chamber terminates with a loading throat 1c, through which the materials and additives to be mixed are loaded. This is more clearly shown in the partial view of Fig. 4.

The pressing plunger system is indicated as a whole with 9, and comprise a sturdy plunger 10, which may be lifted well above the opening of the loading hopper 7, and may be lowered inside the loading throat 1c of the mixing chamber by two or more actuating double-action hydraulic pistons 11 and 12, vertically mounted onto the box structure 1a of the mixing chamber. Preferably, the plunger has a channel A for the circulation of a thermo-regulating fluid through the inlet and outlet tubes B and C.

The plunger 10 closes at the top the mixing chamber 1. It presses or "floats" on the mixture and substantially prevents the mixture from extruding out in the loading throat 1c, along which the plunger is slidably lowered and lifted.

According to an important aspect of the invention, the plunger pressing system 9 has a pneumatic secondary control device 13 of the plunger 10 position during the mixing phase.

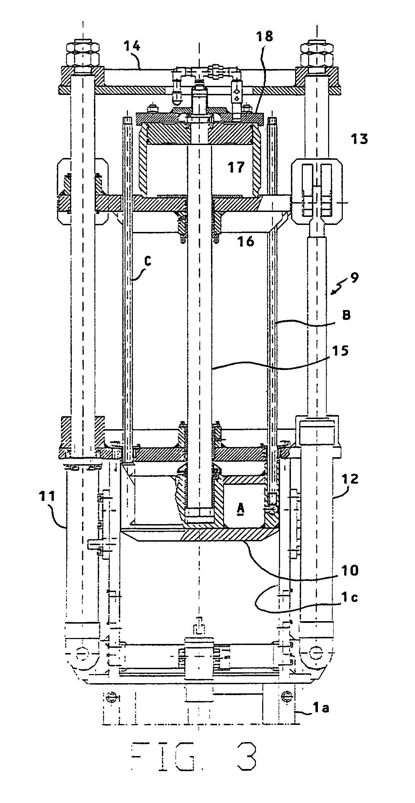

Fig. 3 highlights the lifting and lowering structure of the pressing plunger and also the secondary device for controlling the plunger position during the mixing process, according to an embodiment of the invention.

As may be easily observed from the detail view of Fig. 3, the structure of the pressing plunger assembly 9 comprises two double acting hydraulic pistons 11 and 12, whose stems are fastened to a block or terminal plate 14 of the assembly.

The plunger lowering and lifting shaft 15 passes through a hole of a second block or plate 16 mechanically connected to the stems 11 of the two hydraulic pistons 11 and 12. The movement of the lowering and lifting shaft 15 through the hole of the second plate 16, is checked by the run of a piston 17, fastened to it, inside the chamber of a pneumatic piston 13. The chamber of the pneumatic piston is closed at its bottom by the second plate 16 while it is closed at the top by the cover 18.

Therefore, regardless of the level reached by the pressing plunger realized by commanding the hydraulic pistons 11 and 12, the plunger 10 may be pushed downward together with the shaft 15 to which the plunger is fastened, by injecting compressed air and controlling the air pressure inside the upper chamber of the pneumatic piston 13. This permits to push the piston 16 by what is necessary in order to correctly bear on the mixture and the plunger is able to resiliently absorbs the thrusts transmitted to the plunger 10 by the mixture being processed.

Therefore, the coordinated action of the hydraulic pistons in moving up and down the plunger 10 and in positioning it in contact with the mixture, and of the secondary pneumatic finer control of the position of the plunger providing as well a satisfactory resilient absorption of thrusts, besides avoiding the transfer of intense stresses to the whole structure of the mixer permits a more accurate control of the plunger 10 functions by adjusting its "floating" characteristics.

Fig. 4 is a lateral view of the plunger pressing assembly and of the loading hopper 7 and of its relative driving jacks.

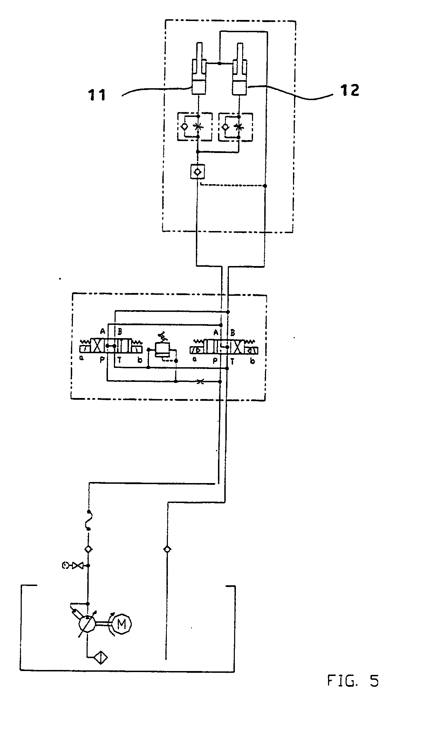

Fig. 5 shows the scheme of the hydraulic circuit that drives the double-acting hydraulic pistons that move up and down the plunger. The pump, the check-valves and the electrovalves for distributing the oil in the piston chambers may be readily recognized by any skilled person familiar with commonly used symbology.

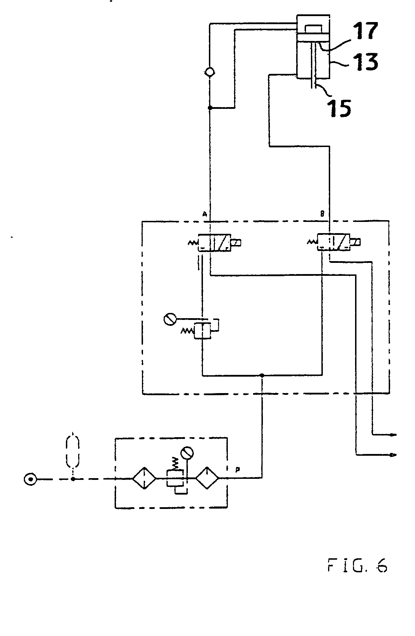

Fig. 6 shows the scheme of the pneumatic circuit for controlling the double-acting pneumatic piston for transmitting the position and controlling the float characteristics of the plunger. The pressure-reducing filter, the check valves and the electrovalves for distributing the air within the chambers of the pneumatic piston may be readily recognized by any skilled person familiar with commonly used symbology.

## Claims

1. A mixer machine (1) comprising a mixing chamber (1a), housing at least two counter-rotating rotors, into which materials to be mixed are pre-established in loaded proportions, said chamber having discharging means (1b) of the mixture at the bottom and a loading throat (1c) at the top into which a plugging and pressing plunger (10) runs, a system of hydraulic pistons (11, 12), for lifting said plunger (10) off the loading throat (1c) for loading the materials to be mixed and lowering bach and pressing plunger (10) into said throat (1c) to prevent extruding of the mixture and to bear on the mixture, and pneumatic cylinder means (13,17) for pressing on said plunger and a pneumatic circuit controlling the pressing and/or the floating of said plunger (10) on the mixture and resiliently absorbing thrusts transmitted to the plunger (10) by the materials being mixed, **characterized in that** a thrust bloch of said plunger lowered and lifted by said hydraulic pistons (11, 12) has a bottom plate (16) connected to and moveable by said hydraulic pistons, defining at the bottom a chamber of a pneumatic cylinder, whose piston (17) is connected to a stem (15) of said plunger (10) sealingly passing through a hole of said bottom plate (16) of the thrust block.

2. The mixer machine according to claim 1, wherein said mixing chamber (1a) and said mobile plunger (10) have conduits through which a fluid is circulated for controlling the temperature of the mixture.

## Patentansprüche

1. Mischungsmaschine (1), umfassend eine mindestens zwei gegenrotierende Rotoren enthaltende Mischungskammer (1a) in welche zumischende Stoffe in geladenen Anteile vorausbestimmt werden, wobei die genannte Kammer Entlademittel (1b) für die Mischung am Boden und eine Laderille (1c) am Kopf aufweist, worin ein Pfropf- und Drücktauchkolben (10) läuft, eine hydraulische Kolbenanordnung (11, 12) zum Heben des genannten Tauchkolbens (10) aus der Laderille (1c) zum Laden der zumischenden Stoffe, und Wiedersenken und Drucken des Tauchkolbens (10) in die genannte Laderille (1c), wodurch die Extrusion der Mischung verhindert wird und der Tauchkolben auf der Mischung gelagert wird, und pneumatische Zylindermittel (13, 17) zum Drücken auf dem genannten Tauchkolben, und einen Druckluftkreislauf, der das Drücken und/oder Schwimmen des genannten Tauchkolbens (10) auf der Mischung steuert und den durch die Stoffe, die gemischt werden, auf den Tauchkolben (10) ausgeübte Schub elastisch aufnimmt,
**dadurch gekennzeichnet, dass** ein Schubblock des genannten Tauchkolbens, das durch die genannten hydraulischen Kolben (11, 12) abgesenkt und aufgehoben wird, eine Bodenplatte (16) aufweist, die mit den genannten hydraulischen Kolben verbunden ist und durch dieselben verschoben wird, die am Boden der Kammer einen pneumatischen Zylinder bestimmt, dessen Kolben (17) mit einem Spindel (15) des genannten Tauchkolbens (10) verbunden ist, der durch eine Bohrung in der genannten Bodenplatte (16) des Schubblockes dichtend durchgeht.

2. Die Mischungsmaschine nach Anspruch 1, wobei die genannte Mischungskammer (1a) und der genannte verschiebbare Tauchkolben (10) Leitungen aufweisen, durch die ein Fluid zur Steuerung der Mischungstemperatur gefloßen wird.

## Revendications

1. Machine à mélanger (1), comprenant une chambre de mélange (1a), contenant au moins deux rotors contre-rotatifs, dans laquelle des matériaux à mélanger sont pré-établis dans des proportions chargées, ladite chambre ayant des moyens de déchargement ( 1 b) du mélange au fond et une gorge de chargement (1c) au sommet dans laquelle cour un piston plongeant de bouchage et pressage (10), un système de pistons hydrauliques (11, 12) pour soulever ledit plongeur (10) de la gorge de chargement (1c) pour charger les matériaux à mélanger et baisser et presser le plongeur (10) dans ladite gorge (1c) afin de prévenir l'extrusion du mélange et d'appuyer sur le mélange, et des moyens à cylindre pneumatique (13, 17) pour presser sur ledit plongeur et un circuit pneumatique contrôlant le pressage et/ou la flottation dudit plongeur (10) sur le mélange et absorbant d'une façon résiliente des poussées transmises au plongeur (10) par les matériaux qui sont mélangés,
**caractérisée en ce qu'**un bloc de poussée dudit plongeur (10) baissé et soulevé par lesdits pistons hydrauliques (11, 12) présente une plaque dé fond (16) connectée auxdits, et mobile par lesdits, pistons hydrauliques, définissant au fond une chambre d'un cylindre pneumatique, le piston (17) duquel est connecté à une tige (15) dudit piston plongeant (10) passant en étanchéité par un trou de ladite plaque de fond (16) du bloc de poussée.

2. La machine à mélanger selon la revendication 1, dans laquelle ladite chambre de mélange (1a) et ledit piston plongeant mobile (10) ont des conduits par lesquels un fluide est circulé afin de contrôler la température du mélange.
